# EUROPÄISCHE PATENTANMELDUNG

(11) **EP 0 967 005 A2**
(43) Veröffentlichungstag der Anmeldung: **29.12.1999**
(21) Anmeldenummer: 99110073.6
(22) Anmeldetag: 22.05.1999
(51) Int. Cl.: B01J 8/02, B01J 19/24, B01J 19/00, H01M 8/06, C01B 3/32, C01B 3/50

(54) **Wasserdampfreformierungsreaktor, insbesondere mit autothermer Prozessführung**

(30) Priorität: 23.06.1998 DE 19827879
(71) Anmelder: DBB Fuel Cell Engines GmbH, 73230 Kirchheim/Teck-Nabern (DE)
(72) Erfinder: Wieland, Steffen, 70180 Stuttgart (DE)
(74) Vertreter: Kocher, Klaus-Peter Dipl.-Phys

(57) **Zusammenfassung**

Die Erfindung bezieht sich auf einen Reaktor zur Wasserdampfreformierung eines Kohlenwasserstoff- oder Kohlenwasserstoffderivat-Ausgangsstoffs, wie Methanol, bei gleichzeitiger Durchführung einer katalytischen Oxidation des Ausgangsstoffs zur Bereitstellung von für die Reformierungsreaktion benötigter Wärme.

Erfindungsgemäß beinhaltet der Reaktor eine Oxidationsstufe zur Durchführung der Oxidationsreaktion unter Zufuhr des Ausgangsstoffs und eines sauerstoffhaltigen Gases sowie eine der Oxidationsstufe nachgeschaltete Reformerstufe zur Durchführung der Wasserdampfreformierungsreaktion, wobei die Reformerstufe mit der Oxidationsstufe in Wärmeübertragungsverbindung steht.

Verwendung z.B. zur Wasserstoffgewinnung für brennstoffzellenbetriebene Kraftfahrzeuge durch Wasserdampfreformierung von flüssig mitgeführtem Methanol.

## Beschreibung

Die Erfindung bezieht sich auf einen Reaktor zur Wasserdampfreformierung eines Ausgangsstoffs in Form eines Kohlenwasserstoffs oder eines Kohlenwasserstoffderivats bei gleichzeitiger Durchführung einer Oxidationsreaktion des Ausgangsstoffs zur Erzeugung von Wärme für die Reformierungsreaktion nach dem Oberbegriff des Anspruchs 1.

Reaktoren mit kombinierter Wasserdampfreformierung und Oxidation des Ausgangsstoffs werden beispielsweise zur Wasserstoffgewinnung in brennstoffzellenbetriebenen Kraftfahrzeugen eingesetzt, wobei meist Methanol als Ausgangsstoff dient. Die für die endotherme Wasserdampfreformierung benötigte Wärme wird teilweise oder ganz durch die vorzugsweise flammenlos, katalytisch durchgeführte Oxidation des Ausgangsstoffs bereitgestellt. Speziell ist mit solchen Reaktoren eine sogenannte autotherme Reformierung realisierbar, bei der durch die Oxidation gerade soviel Wärme erzeugt wird, wie sie für die Wasserdampfreformierung benötigt wird. Solche Reaktoren zur Wasserdampfreformierung von Methanol mit autothermer Prozeßführung sind z.B. in der Offenlegungsschrift DE 44 23 587 A1 offenbart. Bei den dortigen Reaktoren finden die Oxidationsreaktion und die Reformierungsreaktion im selben Reaktionsraum statt, dem hierzu ein Wasserdampf/Methanol-Gemisch zusammen mit einem steuerbaren Anteil an Sauerstoff zugeführt wird. Der erzeugte Wasserstoff gelangt über eine spezifisch wasserstoffdurchlässige Abtrennmembran in einen Wasserstoffabzugsraum und kann von dort abgezogen werden. In einer der dort gezeigten Bauformen bildet der Reaktor einen Plattenstapel mit zwei parallelen Reaktionsraumhälften, die über je eine plattenförmige Abtrennmembran von einem zwischenliegenden Wasserstoffabzugsraum getrennt sind. In einer weiteren Bauform bildet der Reaktor eine Koaxialrohranordnung, wobei die Abtrennmembran als Membranrohr gestaltet ist, die entweder einen innenliegenden Reaktionsraum von einem außenseitig anschließenden Wasserstoffabzugsraum oder einen außenliegenden Reaktionsraum von einem innenliegenden Wasserstoffabzugsraum trennt. Zusätzlich ist die Möglichkeit einer externen Beheizung des Reaktionsraums gegeben, indem dieser mit einem entsprechenden Temperierraum in Wärmekontakt steht, der von einem Temperiermedium durchströmt werden kann.

Ein weiterer Wasserdampfreformierungsreaktor mit mehreren, durch den Reformierungsreaktionsraum hindurchgeführten Wasserstoffabtrennmembranrohren und externer Beheizbarkeit des Reaktionsraums über ein Temperierfluid ist in der Offenlegungsschrift WO 94/08890 offenbart.

Zur selektiven Wasserstoffabtrennung geeignete Abtrennmembranen sind in verschiedenen Formen bekannt und bestehen typischerweise aus poröser Keramik, Glas, Kohlenstoff oder einer dichten Metallschicht oder Kombinationen dieser Materialien derart, daß nur der Wasserstoff hindurchzudiffundieren vermag. Auf weitere Details bezüglich solcher Abtrennmembranen, einschließlich deren Verwendung in katalytischen Wasserdampfreformierungsprozessen, sei auf die Druckschriften EP 0 652 042, EP 0 670 183, EP 0 081 669, EP 0 141 176, EP 0 718 031, WO 94/06542, US 5.451.386, US 5.453.298 und US 5.507.860 sowie die Veröffentlichung J.E. Philpott, Hydrogen Diffusion Technology, Commercial Application of Palladium Membrane, Plat. Met. Rev. 29, 1985, Seite 12 verwiesen.

Aus der Offenlegungsschrift DE 196 18 816 A1 und der Patentschrift US 4.981.676 ist es bekannt, das aus einem Reformierungsreaktionsraum austretende Restgas über einen Brenner zu verbrennen und die dabei entstehende Reaktionswärme zur Beheizung des Reformierungsreaktionsraums zu verwenden. Auch bei den dortigen Reformierungsreaktoren wird der erzeugte Wasserstoff über eine rohrförmige Abtrennmembran selektiv aus einem das Abtrennmembranrohr umgebenden Reformierungsreaktionsraum in einen innenliegenden Wasserstoffabzugsraum abgezogen.

Ein gattungsgemäß aufgebauter Reaktor ist schematisch in der Offenlegungsschrift WO 96/32188 angegeben. Beim dortigen Reaktor befinden sich die beiden Eintrittsseiten von Reformerstufe und Oxidationsstufe auf einer ersten Reaktorseite und deren beide Austrittsseiten auf einer der ersten gegenüberliegenden, zweiten Reaktorseite, so daß Reformerstufe und Oxidationsstufe im Gleichstrom vom jeweiligen Stoffgemisch durchströmt werden. Dabei wird das aus der Oxidationsstufe austretende Stoffgemisch über eine hierzu vorgesehene Rückführleitung zur Reaktoreintrittsseite und dort speziell zur Eintrittsseite der Reformerstufe rückgeführt.

Bei einem in der Patentschrift US 5 112 578 beschriebenen Reaktor ist ein zweistufiger Reformierungsreaktionsraum vorgesehen, von dem eine eintrittsseitige Stufe zur Durchführung einer Reformierungsreaktion und eine austrittsseitige Stufe zur Durchführung einer partiellen Oxidationsreaktion eines zugeführten Kohlenwasserstoffs ausgelegt ist. Zur Sauerstoffzuführung sind Zufuhrrohre vorgesehen, die sich gasdicht durch das Innere der Reformierungsstufe hindurch erstrecken und in der oxidierenden Stufe enden, wo sie mit einer Vielzahl kleiner Sauerstoffverteilungsöffnungen versehen sind.

Bei einem in der Offenlegungsschrift JP 08-301601 (A) offenbarten Methanolreformierungsreaktor ist ein Schichtstapelaufbau vorgesehen, bei dem zwei Reformierungsraumschichten über je eine wärmeleitende Trennwand an gegenüberliegende Seiten einer zwischenliegenden, ihnen strömungstechnisch nachgeschalteten CO-Umwandlungsschicht angrenzen.

In jüngster Zeit wird verstärkt der Einsatz von Wasserdampfreformierungsreaktoren, meist in Form von Methanolreformierungsreaktoren, in brennstoffzellenbetriebenen Kraftfahrzeugen, speziell Automobilen, untersucht. Durch Verwendung solcher Reaktoren brauchen keine schweren Tanks mit dem für die Brennstoffzellen, meist sogenannte PEM-Brennstoffzellen, benötigten, hochreinen Wasserstoff mitgeführt werden. Vielmehr kann der Wasserstoff an Bord aus flüssig mitgeführtem Methanol erzeugt werden. Für die Anwendung in der Fahrzeugtechnik besteht aus Dynamik- und Raumproblemen die Anforderung, die Reaktorkomponenten so klein und leicht wie möglich zu gestalten. Aus Gründen der Wirtschaftlichkeit wird ein hoher Wirkungsgrad angestrebt, so daß so weit wie möglich auf Regelungs- und Steuereinheiten und auf zu erwärmende Einbaugehäuse mit hoher Wärmekapazität verzichtet werden sollte. Gleichzeitig sollte die Reaktoranlage den Wasserstoff mit hoher Reinheit bzw. Selektivität bereitstellen, um die Brennstoffzellen nicht zu schädigen, und sich kostengünstig fertigen lassen.

Der Erfindung liegt daher als technisches Problem die Bereitstellung eines Reformierungsreaktors der eingangs genannten Art zugrunde, der mit relativ wenig Aufwand kompakt und mit relativ geringem Gewicht gefertigt werden kann, eine hohe Wasserstoffausbeute mit hoher Wasserstoffselektivität ermöglicht und einfach zu regeln bzw. zu steuern ist.

Die Erfindung löst dieses Problem durch die Bereitstellung eines Reaktors mit den Merkmalen des Anspruchs 1. Dieser Reaktor beinhaltet neben der Reformerstufe, in welcher die Wasserdampfreformierungsreaktion des als Augsgangsstoff eingesetzten Kohlenwasserstoffs oder Kohlenwasserstoffderivats, wie Methanol, erfolgt, eine dieser vorgeschaltete Oxidationsstufe, in welcher der betreffende Ausgangsstoff katalytisch oxidiert wird. Dabei steht die Reformerstufe mit der Oxidationsstufe über eine gasdichte Trennwand in Wärmeübertragungsverbindung, so daß die bei der katalytischen Oxidation entstehende Wärme bei der endothermen Wasserdampfreformierung in der Reformerstufe genutzt werden kann. Da die Reformerstufe der Oxidationsstufe nachgeschaltet ist, wird ihr eingangsseitig automatisch das aus der Oxidationsstufe austretende, erwärmte Stoffgemisch zugeführt, insbesondere der nicht oxidierte Anteil des zu reformierenden Ausgangsstoffs. Dazu steht die Reformerstufen-Eintrittsseite direkt über einen an einer zugehörigen Reaktorseite angeordneten Umlenkraum mit der Oxidationsstufen-Austrittsseite in Strömungsverbindung.

Ein derart aus einer Oxidationsstufe und einer davon getrennten, jedoch mit ihr in Wärmekontakt stehenden und ihr direkt über den Umlenkraum nachgeschalteten Reformerstufe aufgebauter Reaktor läßt sich in einer kompakten Bauform mit geringem Gewicht realisieren und aufgrund der Trennung des exothermen Oxidationsprozesses vom endothermen Reformierungsprozeß vergleichsweise einfach regeln. Zudem erlaubt diese Reaktorkonstruktion eine hohe Ausbeute der Reformierungsreaktion und läßt eine selektive Wasserstoffabtrennung aus dem Reformatgasgemisch zu. Durch geeignete Steuerung der Menge an zugeführtem sauerstoffhaltigem Gas läßt sich das Verhältnis von Oxidationsrate zu Reformierungsrate in jeweils gewünschter Weise einstellen, insbesondere auch so, daß sich insgesamt ein autothermer Prozeßverlauf ergibt.

Ein nach Anspruch 2 weitergebildeter Reaktor beinhaltet eine Wasserstoffabtrennmembran dergestalt, daß sie entweder an einer der Trennwand gegenüberliegenden Seite der Reformerstufe angeordnet ist oder letztere in Form eines oder mehrerer Hohlkanäle durchquert.

Ein nach Anspruch 3 weitergebildeter Reaktor weist eine die Oxidationsstufe durchquerende Sauerstoffzufuhrlanze auf, mit der es möglich ist, das zur katalytischen Oxidation benötigte, sauerstoffhaltige Gas gleichmäßig verteilt in die Oxidationsstufe einzubringen. In einer Weiterbildung dieser Maßnahme nach Anspruch 4 besteht die Sauerstoffzufuhrlanze aus einem keramischen Hohlfaserkomplex, was ein besonders gleichmäßig verteiltes Einbringen des sauerstoffhaltigen Gases in die Oxidationsstufe ermöglicht.

Bei einem nach Anspruch 5 weitergebildeten Reaktor sind Mittel zur Zuführung von Wasser, das für die Wasserdampfreformierungsreaktion benötigt wird, an der Eintrittsseite der Oxidationsstufe und/oder an der Eintrittsseite der Reformerstufe vorgesehen. Wasser, das bereits an der Eintrittsseite der Oxidationsstufe zugeführt wird, kann beim Durchqueren derselben schon direkt aufgeheizt werden, bevor es in die Reformerstufe gelangt. Gleiches gilt für den nicht oxidierten Anteil des Ausgangsstoffs. Insbesondere kann vorgesehen sein, bereits den gesamten Ausgangsstoff für die Oxidation einerseits und die Reformierung andererseits an der Eingangsseite der Oxidationsstufe in den Reaktor einzuspeisen.

Vorteilhafte Ausführungsformen der Erfindung sind in den Zeichnungen dargestellt und werden nachfolgend beschrieben.
- Fig. 1: eine schematische Längsschnittansicht durch einen Wasserdampfreformierungsreaktor mit Oxidationsstufe und nachgeschalteter Reformerstufe und mit Wassereinspeisung in die Oxidationsstufe und
- Fig. 2: eine schematische Längsschnittansicht eines Wasserdampfreformierungsreaktors entsprechend Fig. 1, jedoch mit Wassereinspeisung an der Reformerstufen-Eintrittsseite.

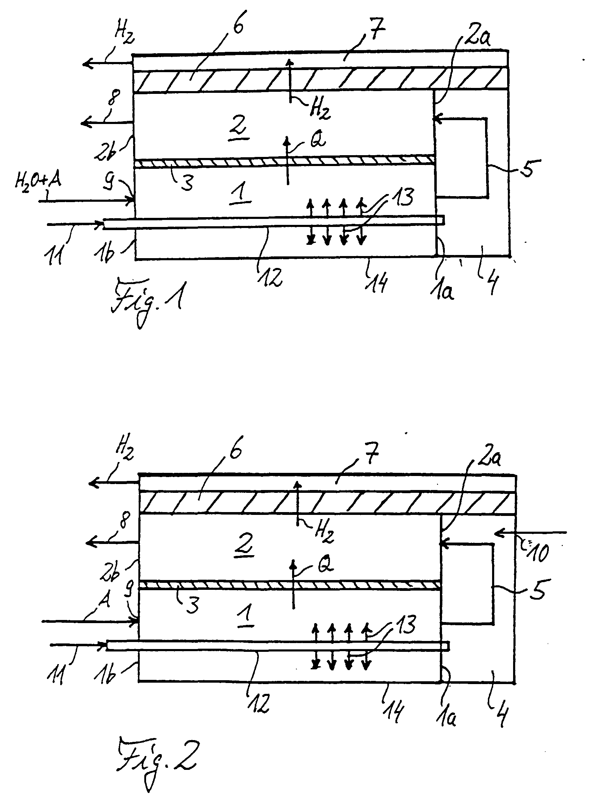

Die in den beiden Fig. 1 und 2 gezeigten Reaktoren sind bis auf den Ort der Einspeisung des für die Wasserdampfreformierungsreaktion benötigten Wassers identisch aufgebaut, so daß funktionell gleiche Elemente mit den gleichen Bezugszeichen versehen sind. Die Reaktoren eignen sich insbesondere zur Wasserstoffgewinnung aus flüssigem Methanol in brennstoffzellenbetriebenen Kraftfahrzeugen. Sie bestehen im Kern aus einer Oxidationsstufe 1 und einer dieser strömungstechnisch nachgeschalteten Reformerstufe 2. Die Oxidationsstufe 1 dient zur Durchführung einer katalytischen Oxidation des als Ausgangsstoff A verwendeten Kohlenwasserstoffs oder Kohlenwasserstoffderivats, wie Methanol, und beinhaltet zu diesem Zweck einen geeigneten herkömmlichen Oxidationskatalysator, z.B. in Form einer Pelletschüttung. Die Reformerstufe 2 dient zur Durchführung der Wasserdampfreformierungsreaktion und enthält hierfür einen geeigneten herkömmlichen Reformierungskatalysator, z.B. ebenfalls in Form einer Pelletschüttung. Je nach Anwendungsfall kann dasselbe Material für den Oxidationskatalysator und den Reformierungskatalysator zum Einsatz kommen.

Während die Reformierungsreaktion endotherm verläuft, ist die Oxidationsreaktion exotherm. Bei Verwendung von Methanol als Ausgangsstoff A wird dieses in der Oxidationsstufe 1 zu Kohlendioxid und Wasser oxidiert, während es in der Reformerstufe 2 mit Wasser zu Kohlendioxid und Wasserstoff reformiert wird. In den gezeigten Reaktoren wird in der Oxidationsstufe 1 erzeugte Wärme Q in der Reformerstufe 2 für die endotherme Reformierungsreaktion genutzt, wozu die Reformerstufe 2 längs einer Breitseite über eine wärmeleitende Trennwand 3 an die Oxidationsstufe 1 angrenzt. Die Reaktoren der Fig. 1 und 2 sind dabei von einem plattenstapelförmigen Aufbau, bei dem die wärmeleitende Trennwand 3 von einer entsprechenden Wärmeübertragerplatte gebildet ist. Alternativ zu dem gezeigten Festkörperwärmeleitungskontakt über die wärmeleitende Trennwand 3 kann die Reformerstufe 2 auch in anderer Weise in Wärmeübertragungsverbindung mit der Oxidationsstufe 1 stehen, z.B. über ein zirkulierendes Wärmeübertragungsmedium, das in der Oxidationsstufe 1 Wärme aufnimmt und sie in der Reformerstufe 2 abgibt. Des weiteren beinhalten die Reaktoren einen Umlenkraum 4, an den die Oxidationsstufe mit ihrer Austrittsseite 1a und die Reformerstufe 2 mit ihrer Eintrittsseite 2a angeschlossen sind. Das aus der Oxidationsstufe 1 austretende Stoffgemisch 5 gelangt dadurch über den Umlenkraum 4 in die Reformerstufe 2. Mit dem in der Oxidationsstufe 1 erwärmten Stoffgemisch 5 gelangt ein weiterer Anteil der erzeugten Oxidationswärme in die Reformerstufe 2.

An ihrer der wärmeleitenden Trennwand 3 gegenüberliegenden Seite ist die Reformerstufe 2 von einer als Membranplatte 6 ausgelegten Wasserstoffabtrennmembran begrenzt. An ihrer der Reformerstufe 2 gegenüberliegenden Seite schließt sich an die Membranplatte 6 ein Wasserstoffabzugsraum 7 an. Die Membranplatte 6 ist so ausgelegt, daß nur Wasserstoff hochselektiv durch sie hindurchdiffundieren kann und so in sehr hochreiner Form aus der Reformerstufe 2 in den Wasserstoffabzugsraum 7 gelangt, von wo er aus dem Reaktor abgezogen und z.B. einem Brennstoffzellensystem zugeführt werden kann. Die Membranplatte 6 ist für diesen Zweck in einer der herkömmlichen Arten unter Verwendung eines Trägermaterials aus Keramik, Glas, Metallschaum, Kohle oder Kunststoff gefertigt. Die übrigen Reaktionsprodukte der Reformierungsreaktion treten an der Austrittsseite 2b der Reformerstufe 2 als Restgasgemisch 8 aus.

An der Eintrittsseite 1b wird in die Oxidationsstufe 1 der zu oxidierende und reformierende Ausgangsstoff A über einen Einlaß 9 eingespeist, und zwar sowohl der zu oxidierende Anteil als auch der zu reformierende Anteil. Beim Reaktor von Fig. 1 wird zusammen mit dem Ausgangsstoff A auch das für die Wasserdampfreformierung benötigte Wasser über diesen Einlaß 9 der Oxidationsstufe 1 in den Reaktor eingeleitet. Im Unterschied dazu ist beim Reaktor von Fig. 2 ein Wassereinlaß 10 am Umlenkraum 4 vorgesehen, über den das Wasser in den Reaktor eingespeist wird, so daß es nicht durch die Oxidationsstufe 1 geführt wird, sondern gleich in die Reformerstufe 2 gelangt. Es versteht sich, daß der Reaktor von Fig. 2 bei Bedarf auch so betrieben werden kann, daß nur ein Teil des benötigten Wassers über den Einlaß 10 des Umlenkraums 4 direkt in die Reformerstufe 2 zugeführt und der übrige Wasseranteil zusammen mit dem Ausgangsstoff A am Einlaß 9 der Oxidationsstufe 1 eingespeist wird.

Der zur Durchführung der Oxidationsreaktion in der Oxidationsstufe 1 benötigte Sauerstoff wird in Form eines sauerstoffhaltigen Gases 11, wie Luft oder Sauerstoffgas selbst, in steuerbarer Menge in die Oxidationsstufe 1 eingeleitet, und zwar unter Verwendung einer die Oxidationsstufe 1 durchquerenden Sauerstoffzufuhrlanze 12. Letztere bewirkt, daß das in ihrem Inneren zugeführte sauerstoffhaltige Gas 11 sehr gleichmäßig verteilt radial nach außen in den Oxidationsraum zudosiert wird, wie mit einigen wenigen Zudosierpfeilen 13 symbolisiert. Die Zufuhrlanze 12 ist von einem herkömmlichen Aufbau, z.B. aus einer keramischen Hohlfaser, die eine besonders feine und gleichmäßige Gaszudosierung ermöglicht. Je nach Bedarf können auch mehrere parallele, die Oxidationsstufe 1 durchquerende Sauerstoffzufuhrlanzen im Abstand voneinander angeordnet sein.

Durch Steuerung oder Regelung der Sauerstoffzufuhr in die Oxidationsstufe 1 können die Reaktionsabläufe in den gezeigten Reaktoren in gewünschter Weise eingestellt werden. Bei Erhöhung der Sauerstoffzufuhr wird mehr Ausgangsstoff A oxidiert und dadurch mehr Oxidationswärme Q der Reformerstufe 2 zugeführt. Umgekehrt kann bei zu hoher Temperatur in der Reformerstufe 2 die Sauerstoffzufuhr in die Oxidationsstufe 1 und dadurch die erzeugte Oxidationswärme Q reduziert werden, wodurch die Reformerstufe 2 wieder auf eine gewünschte Reformierungsreaktionstemperatur abkühlt. Dadurch läßt sich insbesondere ein autothermer Prozeßablauf einstellen, bei dem gerade so viel Wärme Q von der Oxidationsstufe 1 in die Reformerstufe 2 gelangt, wie dort zur Aufrechterhaltung der Temperatur zwecks Durchführung der endothermen Reformierungsreaktion benötigt wird. Die Menge an zugeführtem Ausgangsstoff A wird so einreguliert, daß nach teilweisem Verbrauch durch Oxidation in der Oxidationsstufe 1 noch genau die zur Reformierung gewünschte Menge an Ausgangsstoff A im Stoffgemisch 5 an der Ausgangsseite 1a der Oxidationsstufe 1 vorliegt und über den Umlenkraum 4 in den Reformierungsreaktionsraum der Reformerstufe 2 gelangt. Die einzuspeisende Wassermenge wird auf die zur Wasserdampfreformierungsreaktion der zu reformierenden Ausgangsstoffmenge benötigte Menge eingestellt.

Die gezeigten Ausführungsbeispiele machen deutlich, daß sich der erfindungsgemäße Reformierungsreaktor als kompaktes Wasserstofferzeugungssystem mit geringem Gewicht realisieren läßt, bei dem durch die Trennung von endothermem Reformierungsprozeß und exothermem Oxidationsprozeß eine einfache Prozeßsteuerung bzw. Prozeßregelung möglich ist und eine hohe Ausbeute an Wasserstoff erzielt werden kann. Der erzeugte Wasserstoff wird unter Verwendung einer Wasserstoffabtrennmembran in hochreiner Form abgetrennt und kann z.B. in Brennstoffzellen für mobile Anwendungen verwendet werden.

Es versteht sich, daß neben den gezeigten weitere Realisierungen des erfindungsgemäßen Reaktors möglich sind. So kann der Reaktor statt des gezeigten Platten- bzw. Schichtstapelaufbaus von einer Koaxialrohr-Bauweise sein, die im Längsschnitt in etwa einer Rotation der Schnittansichten der Fig. 1 oder 2 um deren Unterseite 14 entspricht. In diesem Fall sind zur Sauerstoffzufuhr in die Oxidationsstufe eine ringförmige Zufuhrlanze oder mehrere der gezeigten stabförmigen Zufuhrlanzen in gleichmäßigem Abstand voneinander vorgesehen, die wärmeleitende Trennwand ist von einem wärmeleitenden Rohr gebildet, und die Wasserstoffabtrennmembran ist dann als Rohrmembran ausgeführt. Alternativ zur Verwendung einer die Reformerstufe einseitig begrenzenden Membranplatte oder Rohrmembran kann als Wasserstoffabtrennmembran ein Komplex aus einer oder mehreren verteilt angeordneten Hohlfasern vorgesehen sein, welche die Reformerstufe durchqueren.

## Patentansprüche

1. Reaktor zur Wasserdampfreformierung eines Kohlenwasserstoff- oder Kohlenwasserstoffderivat-Ausgangsstoffs (A), insbesondere Methanol, bei gleichzeitiger Durchführung einer katalytischen Oxidation des Ausgangsstoffs zur Bereitstellung von für die Reformierungsreaktion benötigter Wärme, mit
- einer Oxidationsstufe (1) zur Durchführung der katalytischen Oxidationsreaktion unter Zufuhr des Ausgangsstoffs (A) und eines sauerstoffhaltigen Gases (11) und
- einer der Oxidationsstufe nachgeschalteten Reformerstufe (2) zur Durchführung der Wasserdampfreformierungsreaktion, wobei die Reformerstufe an einer Wärmeübertragungsseite über eine gasdichte, wärmeleitende Trennwand (3) mit der Oxidationsstufe in Wärmeübertragungsverbindung steht,
**gekennzeichnet durch**
- einen Umlenkraum (4), an den die Reformerstufe (2) mit einer Eintrittsseite (2a) und die Oxidationsstufe (1) mit einer auf derselben Reaktorseite gelegenen Austrittsseite (1a) angeschlossen sind.

2. Reaktor nach Anspruch 1, weiter
**dadurch gekennzeichnet**, **daß**
eine Wasserstoffabtrennmembran (6) vorgesehen ist, die an einer von der Wärmeübertragungsseite verschiedenen Seite der Reformerstufe angeordnet ist oder die Reformerstufe in Form wenigstens eines Hohlkanals durchquert.

3. Reaktor nach Anspruch 1 oder 2, weiter
**gekennzeichnet durch**
wenigstens eine die Oxidationsstufe (1) durchquerende Sauerstoffzufuhrlanze (12) zur verteilten Einspeisung des sauerstoffhaltigen Gases (11) in die Oxidationsstufe.

4. Reaktor nach Anspruch 3, weiter
**dadurch gekennzeichnet**, **daß**
die Sauerstoffzufuhrlanze (12) aus einer keramischen Hohlfaser aufgebaut ist.

5. Reaktor nach einem der Ansprüche 1 bis 4, weiter
**gekennzeichnet durch**
Mittel (9, 10) zur Wasserzuführung an der Eintrittsseite (1b) der Oxidationsstufe (1) und/oder an der Eintrittsseite (2a) der Reformerstufe (2).
